(19)

**Europäisches Patentamt**
**European Patent Office**
**Office européen des brevets**

(11) **EP 4 722 942 A1**

(12) **EUROPEAN PATENT APPLICATION**

(43) Date of publication:
08.04.2026 Bulletin 2026/15

(21) Application number: 25203519.1

(22) Date of filing: 20.09.2025

(51) International Patent Classification (IPC):
**G06F 16/2452** (2019.01)    **G06F 16/334** (2025.01)
**G06F 40/30** (2020.01)

(52) Cooperative Patent Classification (CPC):
**G06F 16/3344; G06F 16/24522; G06F 40/20;**
**G06F 40/205; G06F 40/284; G06F 40/30**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: 02.10.2024 IN 202421074493

(71) Applicant: **Tata Consultancy Services Limited**
**Mumbai, Maharashtra 400 021 (IN)**

(72) Inventors:
• **BHAISAHEB, Shabbirhussain Hamid**
  **411057 Pune, Maharashtra (IN)**

• **PATWARDHAN, Manasi Samarth**
  **411057 Pune, Maharashtra (IN)**
• **ARORA, Aseem**
  **110001 New Delhi, Delhi (IN)**
• **VIG, Lovekesh**
  **110001 New Delhi, Delhi (IN)**
• **SARAWAGI, Sunita**
  **400076 Mumbai, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR TEMPLATIZATION AND RETRIEVAL OF DOMAIN KNOWLEDGE FOR ENTERPRISE TEXT-TO-SQL SEMANTIC PARSING**

(57)    Existing approaches for templatization and retrieval of domain knowledge for SQL queries for the enterprise databases have the disadvantages that they do not understand the context of natural language query and retrieve the most suitable templatized domain statement for SQL query generation. Embodiments disclosed herein provide a method and system for templatization and retrieval of domain knowledge for enterprise text-to-SQL semantic parsing. In this approach, the system generates the templatized domain statements for the domain database, the templatized domain statements assist in understanding the natural language query and guides the model for generating the SQL query and retrieve the most suitable templatized domain statement for any natural language query to guide the trained model to generate the associated SQL query.

FIG. 1B

**Description**

CROSS-REFERENCE TO RELATED APPLICATIONS AND PRIORITY

The present application claims priority from Indian application no. 202421074493, filed on October 02, 2024.

TECHNICAL FIELD

The disclosure herein generally relates to the field of natural language processing, and, more particularly, to method and system for templatization and retrieval of domain knowledge for enterprise text-to-Structured Query Language (SQL) semantic parsing.

BACKGROUND

Translating Natural Language (NL) queries into Structured Query Language (SQL) queries requires including domain experts having knowledge of NL and SQL, or require experts to work together, for providing knowledge about the domain and database (DB) administrators for understanding of DB schema, structure of the DB, and their mapping to SQL. There are many existing techniques available for converting the natural language queries to SQL queries which consider databases comprising semantically meaningful table or column names and cell values, making it easier for conversion models to accurately link domain expressions in the NL query with the DB schema or cell elements. For more challenging DBs with semantically meaningless entities significantly perform worse in conversion. Large performance gap on recent benchmarks between approaches with and without use of NL query specific oracle domain knowledge indicated an indispensable need for domain knowledge augmentation for NL query resolution. The existing DBs contain realistic DBs from multiple domains with entities requiring external information for query understanding, and rely on unrealistic, ad-hoc query specific textual hints for expressing domain knowledge.

Many existing works address the problem of availing domain statements to understand the NL query. Existing approaches for NL-to-SQL semantic parsing rely on Language Model (LM) fine tuning or in-context learning, and utilize DBs with semantically meaningful table and column names for finetuning or training. This results often in failure to translate to enterprise DBs with semantically opaque schema elements and missing information about NL domain statements. Top performing approaches on the dataset assume availability of domain statements specific to each NL query. The assumption of availability of domain statements specific to each NL query does not hold right always, as the domain statements have to be dynamically mapped to NL queries using the retrieval process. Another existing approach retrieves similar few-shots for NL-to-SQL using text based or composition-based similarity, however, it fails to describe relevant entities for NL query understanding.

SUMMARY

Embodiments of the present disclosure present technological improvements as solutions to one or more of the above-mentioned technical problems recognized by the inventors in conventional systems. For example, in one embodiment, a method for templatization and retrieval of domain knowledge for enterprise text-to-SQL semantic parsing is provided. The method includes: receiving, via one or more hardware processors, a) at least one query in natural language, b) a database schema, and c) a database meta data from domain specific data source; pre-processing, via the one or more hardware processors, the at least one query to obtain a pre-processed at least one query; segmenting, via the one or more hardware processors, the pre-processed at least one query into one or more sets, each comprising one or more sub-queries; computing, via the one or more hardware processors, an embedding for each of the one or more sub-queries in the one or more sets; computing, via the one or more hardware processors, a similarity metric between the embedding of the one or more sub-queries in the one or more sets, and an embedding of a natural language part of a plurality of templatized domain statements; computing, via the one or more hardware processors, a weighted set score for each of the one or more sets using the one or more sub-queries in the one or more sets and the similarity metric, wherein the weighted set score represents extent of similarity of the at least one query with each of the plurality of templatized domain statements; retrieving, via the one or more hardware processors, one or more of the plurality of templatized domain statements based on the weighted set score; and generating, via the one or more hardware processors, a SQL query for the at least one query in natural language, using the database schema, the database meta data, and the retrieved one or more templatized domain statements.

In an aspect of the method, the pre-processing comprises replacing a numerical value and a date to a predefined fixed integer.

In another aspect of the method, the pre-processed at least one query is segmented into the one or more sets comprising the one or more sub-queries comprises: creating, via the one or more hardware processors, a list of a plurality of individual words in the pre-processed at least one query; generating, via the one or more hardware processors, the one or more sets comprising a plurality of combinations of the one or more sub-queries in the one or more sets by iterating through the list of a plurality of individual words, and joining two or more of the plurality of individual words; iteratively generating, via the one or more hardware processors, the one or more sub-queries until all of the plurality of individual words are used in at least one of the one or more sets, wherein each of the one or more sets comprises one or more sub-queries of same or different length of plurality of individual words, and wherein each of the one or more sub-queries among the one or more sets and each of the one or more set among the one or more sets are unique; and generating, via the one or more hardware processors, the one or more sub-queries in the one or more sets until the one or more sub-queries are matching with the at least one query in natural language.

In another aspect of the method, the weighted set score is computed by using the length of sub-query representing number of words in the sub-query and the one or more similarity metric is represented as:

Set_Score = Σ (length of sub-string (number of words)) * (Max. similarity score with a templatized domain statement), where, the length of sub-string is the number of words in the one or more sub-queries, and the Max. similarity score with a templatized domain statement is the similarity metric of the one or more sub-queries in the one or more sets.

In another aspect of the method, generating the plurality of templatized domain statements comprises: receiving, via the one or more hardware processors, a) one or more domain statements for a given domain, in natural language, and b) a domain specific database schema comprising a name of a plurality of tables, columns, data types, and representative strings corresponding to one or more entities stored in each column; selecting, via the one or more hardware processors, one or more few shot exemplars from a training dataset comprising a natural language query and a plurality of associated SQL queries; generating, via the one or more hardware processors, the natural language part of each of the plurality of templatized domain statement by applying a trained model on the one or more few shot exemplars, the one or more domain statements and the domain specific database schema; generating, via the one or more hardware processors, a SQL logic for the natural language part of each of the plurality of the templatized domain statements by applying the trained model on the one or more few shot exemplars, the one or more domain statements, the database schema, and the generated natural language part of each of the plurality of templatized domain statements; validating, via the one or more hardware processors, the natural language part of each of the plurality of templatized domain statements and associated SQL logic for consistency using the trained model, wherein, if validation is inconsistent, the SQL logic associated with the natural language part of each of the plurality of templatized domain statements is updated using the trained model, and wherein, if validation is consistent, the templatized domain statement along with the SQL logic are generated by using the trained model for combining the natural language part of each of the plurality of templatized domain statements and the SQL logic, based on the one or more few shot exemplar; and computing, via the one or more hardware processors, the embedding of the natural language part of the plurality of templatized domain statements , wherein the computed embedding is stored in a database.

In another embodiment, a system is provided. The system includes one or more hardware processors, a communication interface, and a memory storing a plurality of instructions. The plurality of instructions cause the one or more hardware processors to: receive a) at least one query in natural language, b) a database schema, and c) a database meta data from domain specific data source; pre-process the at least one query to obtain a pre-processed at least one query; segment the pre-processed at least one query into one or more sets, each comprising one or more sub-queries; compute an embedding for each of the one or more sub-queries in the one or more sets; compute a similarity metric between the embedding of the one or more sub-queries in the one or more sets, and an embedding of a natural language part of a plurality of templatized domain statements; compute a weighted set score for each of the one or more sets using the one or more sub-queries in the one or more sets and the similarity metric, wherein the weighted set score represents extent of similarity of the at least one query with each of the plurality of templatized domain statements; retrieve one or more of the plurality of templatized domain statements based on the weighted set score; and generate a SQL query for the at least one query in natural language, using the database schema, the database meta data, and the retrieved one or more templatized domain statements.

In an aspect of the system, the pre-processing comprises replacing a numerical value and a date to a predefined fixed integer.

In another aspect of the system, the one or more hardware processors are configured to segment the pre-processed at least one query into the one or more sets comprising the one or more sub-queries comprises: creating a list of a plurality of individual words in the pre-processed at least one query; generating the one or more sets comprising a plurality of combinations of the one or more sub-queries in the one or more sets by iterating through the list of a plurality of individual words, and joining two or more of the plurality of individual words; iteratively generating the one or more sub-queries until all of the plurality of individual words are used in at least one of the one or more sets, wherein each of the one or more sets comprises one or more sub-queries of same or different length of plurality of individual words, and wherein each of the one or more sub-queries among the one or more sets and each of the one or more set among the one or more sets are unique; and generating the one or more sub-queries in the one or more sets until the one or more sub-queries are matching with the at least one query in natural language.

In another aspect of the system, the one or more hardware processors are configured to compute the weighted set score by using the length of sub-query representing number of words in the sub-query and the one or more similarity metric is represented as:

Set_Score = Σ (length of sub-string (number of words)) * (Max. similarity score with a templatized domain statement), where, the length of sub-string is the number of words in the one or more sub-queries, and the Max. similarity score with a templatized domain statement is the similarity metric of the one or more sub-queries in the one or more sets.

In another aspect of the system, the one or more hardware processors are configured to generate the plurality of templatized domain statements comprises: receiving a) one or more domain statements for a given domain in natural language, and b) a domain specific database schema comprising a name of a plurality of tables, columns, data types, and representative strings corresponding to one or more entities stored in each column; selecting one or more few shot exemplars from a training dataset comprising a natural language query and a plurality of associated SQL queries; generating the natural language part of each of the plurality of templatized domain statement by applying a trained model on the one or more few shot exemplars, the one or more domain statements and the domain specific database schema; generating a SQL logic for the natural language part of each of the plurality of the templatized domain statements by applying the trained model on the one or more few shot exemplars, the one or more domain statements, the database schema, and the generated natural language part of each of the plurality of templatized domain statements; validating the natural language part of each of the plurality of templatized domain statements and associated SQL logic for consistency using the trained model, wherein, if validation is inconsistent, the SQL logic associated with the natural language part of each of the plurality of templatized domain statements is updated using the trained model, wherein, if validation is consistent, the templatized domain statement along with the SQL logic are generated by using the trained model for combining the natural language part of each of the plurality of templatized domain statements and the SQL logic, based on the one or more few shot exemplar; and computing the embedding of the natural language part of the plurality of templatized domain statements, wherein the computed embedding is stored in a database.

In yet another aspect, there are provided one or more non-transitory machine-readable information storage mediums comprising one or more instructions which when executed by one or more hardware processors cause: receiving a) at least one query in natural language, b) a database schema, and c) a database meta data from domain specific data source; pre-processing the at least one query to obtain a pre-processed at least one query; segmenting the pre-processed at least one query into one or more sets, each comprising one or more sub-queries; computing an embedding for each of the one or more sub-queries in the one or more sets; computing a similarity metric between the embedding of the one or more sub-queries in the one or more sets, and an embedding of a natural language part of a plurality of templatized domain statements; computing a weighted set score for each of the one or more sets using the one or more sub-queries in the one or more sets and the similarity metric, wherein the weighted set score represents extent of similarity of the at least one query with each of the plurality of templatized domain statements; retrieving one or more of the plurality of templatized domain statements based on the weighted set score; and generating a SQL query for the at least one query in natural language, using the database schema, the database meta data, and the retrieved one or more templatized domain statements.

In an aspect of the non-transitory computer readable medium, the one or more hardware processors are configured to pre-process comprises replacing a numerical value and a date to a predefined fixed integer.

In another aspect of the non-transitory computer readable medium, the one or more hardware processors are configured to segment the pre-processed at least one query into the one or more sets comprising the one or more sub-queries comprises: creating a list of a plurality of individual words in the pre-processed at least one query; generating the one or more sets comprising a plurality of combinations of the one or more sub-queries in the one or more sets by iterating through the list of a plurality of individual words, and joining two or more of the plurality of individual words; iteratively generating the one or more sub-queries until all of the plurality of individual words are used in at least one of the one or more sets, wherein each of the one or more sets comprises one or more sub-queries of a same or different length of plurality of individual words, and wherein each of the one or more sub-queries among the one or more sets and each of the one or more set among the one or more sets are unique; and generating the one or more sub-queries in the one or more sets until the one or more sub-queries are matching with the at least one query in natural language.

In another aspect of the non-transitory computer readable medium, the one or more hardware processors are configured to compute the weighted set score by using the length of sub-query representing number of words in the sub-query and the one or more similarity metric is represented as:

Set_Score = Σ (length of sub-string (number of words)) * (Max. similarity score with a templatized domain statement), where, the length of sub-string is the number of words in the one or more sub-queries, and the Max. similarity score with a templatized domain statement is the similarity metric of the one or more sub-queries in the one or more sets.

In another aspect of the non-transitory computer readable medium, the one or more hardware processors are configured to generate the plurality of templatized domain statements comprises: receiving a) one or more domain statements for a given domain in natural language, and b) a domain specific database schema comprising a name of a plurality of tables, columns, data types, and representative strings corresponding to one or more entities stored in each column; selecting one or more few shot exemplars from a training dataset comprising a natural language query and a plurality of associated SQL queries; generating the natural language part of each of the plurality of templatized domain statement by applying a trained model on the one or more few shot exemplars, the one or more domain statements and the domain specific database schema; generating a SQL logic for the natural language part of each of the plurality of the templatized domain statements by applying the trained model on the one or more few shot exemplars, the one or more domain statements, the database schema and the generated natural language part of each of the plurality of templatized domain statements; validating the natural language part of each of the plurality of templatized domain statements and associated SQL logic for consistency using the trained model, wherein, if validation is inconsistent, the SQL logic associated with the natural language part of each of the plurality of templatized domain statements is updated using the trained model, wherein, if validation is consistent, the templatized domain statement along with the SQL logic are generated by using the trained model for combining the natural language part of each of the plurality of templatized domain statements and the SQL logic, based on the one or more few shot exemplar; and computing the embedding of the natural language part of the plurality templatized domain statements, wherein the computed embedding is stored in a database.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A illustrates an exemplary block diagram of a system for templatization and retrieval of domain knowledge for enterprise text-to-SQL semantic parsing, according to some embodiments of the present disclosure.
FIG. 1B illustrates a process overview of the system of FIG. 1A, in accordance with some embodiments of the present disclosure.
FIGS. 2A and 2B is a flow diagram illustrating a method for templatization and retrieval of domain knowledge for enterprise text-to-SQL semantic parsing, using the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The understanding of natural language (NL) query and understanding the context of the query leads to generating the associated SQL logic by any trained or Language Models (LM). The existing approaches for NL-to-SQL semantic parsing rely on LM fine-tuning or in-context learning. The existing databases (DBs) with semantically meaningful table, column names often fail to translate to enterprise DBs with semantically opaque schema elements and missing information about NL domain statements. For more challenging databases with semantically meaningless entities, their average performance is significantly worse in NL-SQL semantic parsing. This variation in performance often starts from the domain-specific vocabulary used to frame the NL queries, providing LLMs with additional context information in the form of relevant domain statements may help address this problem. For the larger enterprise DBs the domain statements are huge in numbers, mapping irrelevant domain statements to the NL query misleads the model to generate incorrect SQL logic. The existing datasets contain realistic DBs from multiple domains with entities requiring external information for NL query understanding. The top performing approaches assume that domains statements are available for each NL query. In real scenario the assumption of availability of domain statements specific to each NL query does not hold right always, as the domain statements have to be dynamically mapped to NL queries using the retrieval process. Another existing approach retrieves similar few-shots for NL-to-SQL using text based or composition-based similarity, however, it fails to describe relevant entities for NL query understanding.

To address the technical challenges in the art, embodiments disclosed herein provide method and system for templatization of natural language query and retrieving templatized natural language query to generate Structured Query Language (SQL) query. approach which involves the following steps. The natural language query, database schema and database meta data from domain specific data source are obtained. Then, a numerical value and a date in the natural language query is replaced with a predefined fixed integer. The natural language query is considered as one set and creating multiple sub-queries by dynamically joining the individual words, similarly, joining the individual words of different lengths to create multiple sets, and finally terminating sub-queries generation when sub-query is matching with natural language query. The sub-queries among multiple sets are unique and each set is unique among multiple sets. For each sub-queries in multiple sets embeddings are computed. Similarity metric is computed for each sub-queries by using the embeddings of each sub-queries and the embeddings of the natural language of a templatized domain statements which are stored in the database and are used computing a similarity metric. Set score computed for each set using each sub-queries and similarity metric. The computed set score represents the similarity between sub-queries and the store templatized domain statements. Based on the weighted score the stored templatized domain statements are retrieved for the natural language query. Finally generating the SQL query for the natural language query using the database schema, the database meta data and the retrieved templatized domain statements. The templatized domain statements are the natural language part of the SQL logic for a given natural language query. The templatized domain statements and corresponding SQL logic are generated and validated using the trained model. The embeddings of the templatized domain statements are computed and stored in the system. The templatized domain statements provide the context of the natural language query and guides the trained model for generating the associated SQL query for natural language query. The process of retrieval checks for all the possibilities associated with the natural language query and retrieved the similar templatized domain statements.

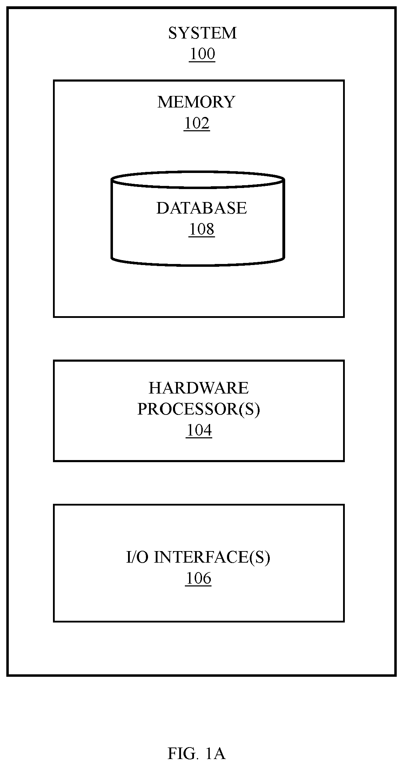

Referring now to the drawings, and more particularly to FIG. 1A through FIG.2B, where similar reference characters denote corresponding features consistently throughout the figures, there are shown preferred embodiments, and these embodiments are described in the context of the following exemplary system and/or method.

FIG. 1A depicts an exemplary system 100 for templatization and retrieval of domain knowledge for enterprise text-to-SQL semantic parsing, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

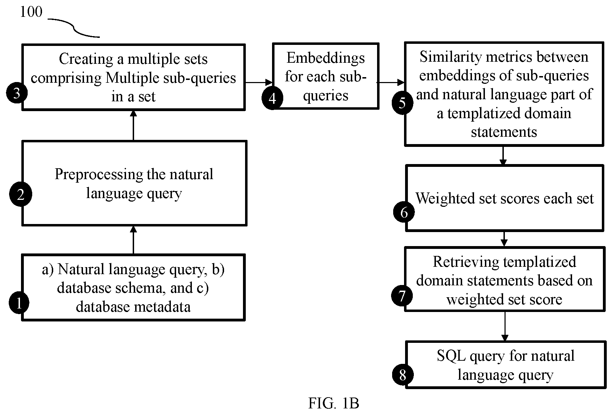

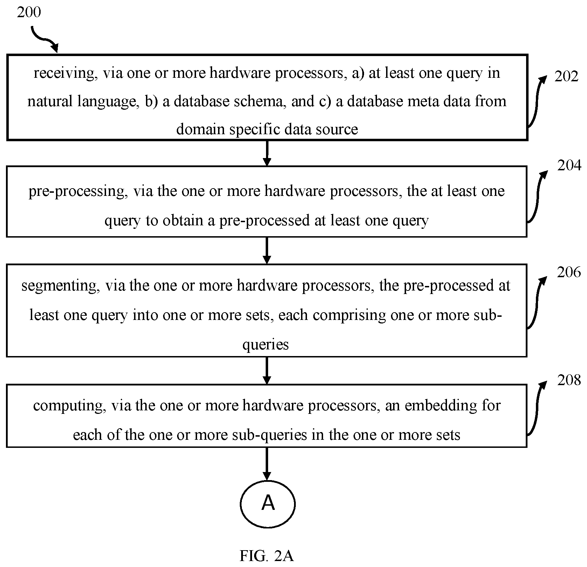

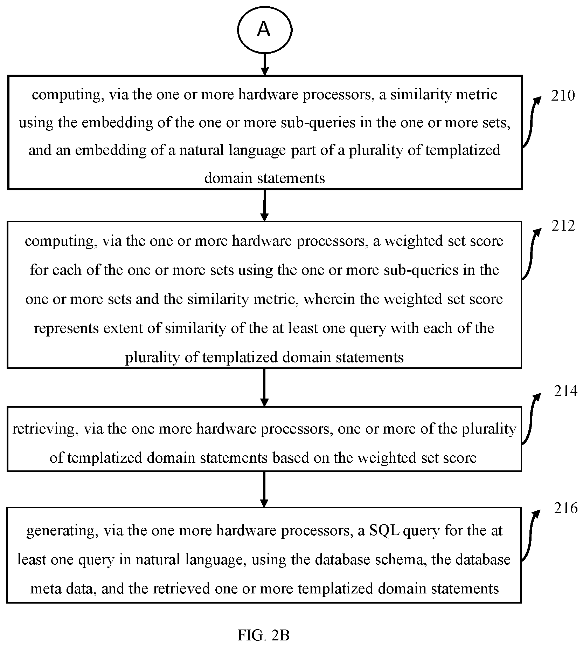

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with process overview of the system in FIG. 1B and flow diagram depicted in FIG. 2A and FIG. 2B.

In an embodiment, the system 100 comprises one or more data storage devices or the memory 102 operatively coupled to the processor(s) 104 and is configured to store instructions for execution of steps of the method 200 depicted in FIG. 2A and FIG. 2B by the processor(s) or one or more hardware processors 104.

Further, the memory 102 includes a database 108. The database 108 can store the plurality of templatized domain statements, embeddings of the plurality of templatized domain statements, and trained model. The steps of the method of the present disclosure will now be explained with reference to the components or blocsks of the system 100 as depicted in FIG. 1. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIG. 2A and FIG. 2B is a flow diagram illustrating a method 200 to templatization and retrieval of domain knowledge for enterprise text-to-SQL semantic parsing, according to some embodiments of the present disclosure. At step 202 of the method 200, the one or more hardware processors 104 are configured to receive a) at least one query in natural language, b) a database schema, and c) a database meta data from domain specific data source. The at least one query in natural language is received for converting as the SQL query for querying a targeted database. The database schema comprises names of tables, columns, column types, and representative strings corresponding to a plurality of entities. The database meta data is a catalogue of the database. The database is related to the specific domain for which SQL queries are generated for the at least one query in natural language.

Further, at step 204 of the method 200, the one or more hardware processors 104 are configured to pre-process the at least one query, to generate a pre-processed at least one query. The pre-processing is performed for handling format mismatches in the at least one query in natural language. The pre-processing is performed for formatting the at least one query in natural language to make it readable by the system 100, matching the at least one query in natural language to the pre-defined format. **In** an embodiment, if the at least one query in natural language is not present in the pre-defined format, then the complete or part of the at least one query in natural language to a desired format. For example, the pre-processing may be performed by replacing the non-domain specific numerical and date values with fixed integer placeholder value, such as replacing the date, year, and terms which are not part the database tables, columns, and column types are replaced with fixed integer placeholder value which are present in the database tables, columns, and column types.

Further, at step 206 of the method 200, the one or more hardware processors 104 are configured to segment the pre-processed at least one query into one or more sets, each comprising one or more sub-queries. The pre-processed at least one query is segmented by creating a list of a plurality of individual words by splitting the pre-processed at least one query to the plurality of individual words. Further, the one or more sub-queries are generated by dynamically combining two or more of the plurality of individual words. Further, different combinations of the one or more sub-queries are used to generate the one or more sets of the sub-queries. The combinations of the one or more sub-queries in the each of the one or more set is created by iterating through the list of the plurality of individual words joining the plurality of individual words in at least one query in natural language order or sequence. All of the plurality of individual words are used for generating the one or more sub-queries in at least one of the one or more sets. Each of the one or more sets comprises one or more sub-queries having the plurality of individual words of same or different lengths. Generation of the sub-queries is terminated when at least one of the one or more sub-queries is matching with the at least one query in natural language. Each of the one or more sub-queries among the one or more sets and each of the one or more sets among the one or more sets are unique.

Further, at step 208 of the method 200, the one or more hardware processors 104 are configured to compute an embedding for each of the one or more sub-queries in the one or more sets. The system 100 may use any suitable technique, such as, but not limited to, a sentence transfer model, for creating the embedding. The sentence transfer model used maybe a sentence Bidirectional Encoder Representations from Transformers (BERT) model, for computing embeddings for each of the one or more sub-queries in the one or more sets.

Further, at step 210 of the method 200, the one or more hardware processors 104 are configured to compute a similarity metric using the embedding of the one or more sub-queries in the one or more sets, and a pre-configured embedding of a natural language part of a plurality of templatized domain statements. The plurality of templatized domain statements are generated using the trained model, as a onetime process and are stored in the database 108. The plurality of templatized domain statements are the natural language part of the SQL query, each comprising the table name and/or column name of the domain database. The similarity metric is computed for all the combinations of the one or more sub-queries in the one or more sets and the natural language part of the plurality of templatized domain statements. In an embodiment, the plurality of templatized domain statements are generated for the domain as the onetime process. Further, embeddings of the natural language part of the plurality of templatized domain statements are generated and are stored in the database 108.The similarity metric represents a closest score computed between each combination of one or more sub-queries in the one or more sets and the natural language part of each of the plurality of templatized domain statements.

Further, at step 212 of the method 200, the one or more hardware processors 104 are configured to compute a weighted set score for each of the one or more sets using the one or more sub-queries in the one or more sets and the similarity metric. The weighted set score represents extent of similarity of the at least one query with each of the plurality of templatized domain statements. The weighted set score is computed using length of the one or more sub-queries and the similarity metric of the one or more sub-queries in the one or more sets. The length of the one or more sub-queries represents a number of words in the one or more sub-queries. The weighted set score is represented as:

Set_Score = Σ (length of sub-string (number of words)) * (Max. similarity score with a templatized domain statement) where, length of sub-string (number of words) is the number of words in the one or more sub-queries, and Max. similarity score with a templatized domain statement is the similarity metric of the one or more sub-queries in the one or more sets.

Further, at step 214 of the method 200, the one or more hardware processors 104 are configured to retrieve one or more of the plurality of templatized domain statements based on the weighted set score. The weighted set score is used as an indicator for retrieving one or more of the plurality of templatized domain statements. For example, the system 100 may be configured to retrieve top-k templatized domain statements of the plurality of templatized domain statements, when the plurality of templatized domain statements are arranged or listed in descending order of the weighted set score.

Further, at step 216 of the method 200, the one or more hardware processors 104 are configured to generate a SQL query for the at least one query in natural language using the database schema, the database meta data, and the retrieved one or more templatized domain statements. A model is trained for generating the SQL query for the at least one query in natural language, further model trained for generating the natural language part of the plurality of templatized domain statements and the SQL logic of the plurality of templatized domain statements. Further model is fine-tuned to improve the accuracy. The trained model is used for generating the SQL query for at least one query in natural language. The trained model uses the database schema, the database meta data, and the retrieved plurality of templatized domain statements, for generating the SQL queries. The process of generating the plurality of templatized domain statements comprises three steps. a) First, the trained model generates a primary part of the plurality of templatized domain statements for the domain statements using the one or more few shot exemplars, and the domain specific database schema. The primary part refers to the natural language part of the plurality of templatized domain statements and provides SQL context of the domain statements. The one or more few shot exemplars provides the context to the trained model to generate the primary part of the plurality of templatized domain statements. The e one or more few shot exemplars are selected from a training dataset. The one or more domain statements are received from the domain experts for understanding the nomenclature and a concept of the domain of a given question. The domain specific database schema comprises a name of tables, columns, data types, and representative strings corresponding to entities stored in each column.

Secondly, the trained model generates a secondary part of the plurality of templatized domain statements. The second part herein refers to SQL logic for the natural language part of the plurality of templatized domain statements. The secondary part is generated using the one or more few shot exemplars, the domain statement, the domain specific database schema and the natural language part of the plurality of templatized domain statement.

Thirdly, the natural language part of the plurality of templatized domain statements and corresponding SQL logic are validated for consistency using the trained model. If the validation is inconsistent, then the SQL logic associated with the natural language part of each of the plurality of templatized domain statements is updated using the trained model. However, if validation is consistent then generating the plurality of templatized domain statements along with the SQL logic by applying the trained model for combining the natural language part of each of the plurality of the templatized domain statements and the associated SQL logic. Combining the each of the plurality of the templatized domain statements and the associated SQL logic is preformed based on the one or more few shot exemplar. The embeddings of the natural language part of the plurality of templatized domain statements are computed using any suitable technique, such as, but not limited to, a sentence transfer model. The sentence transfer model used maybe a sentence BERT model, for computing embeddings of the natural language part of the plurality of templatized domain statements and storing the computed embedding in a database.

Experimental analysis:

1. Experimental setup

Dataset: The system 100 synthesize a dataset extending BirdSQL, which is a collection of DBs from real platforms such as Kaggle, Relation.vit, etc, spanning over diverse professional domains including medical, finance, education, sports, and games. The queries posed on those DBs require domain understanding of the four categories: (i) description of cryptic schema names, (ii) description of string values of categorical columns, (iii) Handling format mismatches by replacing the non-domain specific numerical and date values with fixed integer placeholder value, and (iv) Converting NL Expression to formula for specifying domain-specific predicates as depicted in Table 1 - four categories of domain statements illustrating types of domain understanding required for DBs . Taking 11 Dev split DBs into consideration, each belonging to a different domain with a total of 1534 parallel NL-SQL query pairs.

Table 1

| Category | Database | Natural Language Domain Statement | Templatized Domain Statement |
|---|---|---|---|
| Descriptio n of Cryptic Schema Names | Financial | A12 indicates the unemployment ratio for year 1995. | 'unemployment ratio of year 1995' refers to district. A12 |
| | Formula 1 | Location coordinates of the circuit of the race are given be a pair of latitude and longitude | 'location coordinates of the circuit of the race' refers to circuits.lat, circuits.lng |
| | Thrombosi s Prediction | ALB denotes the Albumin Level in the laboratory experiments | 'albumin level' refers to Laboratory.ALB |
| Descriptio n of String Va-lues of Ca-tegorica l Columns | California Schools | Amador is a school county in California | 'Amador' refers to schools.County = 'Amador' |
| | Codebase Communit y | 'Eliciting prior from experts' is a type of the title of a post in coding community | the post 'eliciting prior from experts' refers to posts. Title = 'Eliciting prior from experts' |
| | Toxicology | Non-carcinogenic molecules are labelled as '-' | 'non-carcinogenic molecules' refers to molecule.label = '-' |
| | Student Club | Postcards, Posters is a type | 'Post Cards, Posters' refers to expense. |
| | | of expense description made by students | expense_description = 'Post Cards, Posters' |
| Handling Format Mismatche s | Debit Card Specializin g | September 2013 is represented as the date format year month = '201309' | 'September 1000' refers to yearmonth.Date = '100009' |
| | Codebase Communit y | Last accessed by user after the date 2014/9/1 means the Last Access Date >'2014-09-01' | 'last accessed after date 1000/10/10' refers to date(users.LastAccessDate) >'1000-10-10' |
| | Student Club | Events conducted between No-vember 2019 & March 2020 sug-gests range of event_date BETWEEN '2019-01-11' and '2020-03-31' | 'Events conducted from November 1000 to March 1000' refers to date(SUBSTR(event.event_d ate, 1, 10)) BETWEEN '1000-01-11' AND '1000-03-31' |
| Convertin g NL Expres-sion to For-mula | European Football2 | Highest potential score is an attribute player calculated by taking taking maximum of potential | 'highest potential score' refers to ORDER BY Player_Attributes.potential DESC LIMIT 1 |
| | Thrombosi s Prediction | Normal level of complement 3 | 'normal level of complement 3' |

(continued)

| Category | Database | Natural Language Domain Statement | Templatized Domain Statement |
|---|---|---|---|
| | | suggests value of C3 > 35 | refers to Laboratory.C3 > 35 |
| | California Schools | Eligible free rate for K-12 students is the ratio of 'Free or Reduced-Price Meals Count (K-12)' to 'Enrollment (K-12)' | 'Eligible free rate for K-12 students' refers to frpm.'FRPM Count (K-12)' / frpm.'Enrollment (K-12)' |
| | Toxicology | Percentage of carbon is calculated by DIVIDE(COUNT(carb on atom elements) *100, COUNT(atom ids)) | 'percentage of carbon' refers to CAST(COUNT (DISTINCT CASE WHEN atom.element = 'c' THEN atom.atom_id ELSE NULL END) AS REAL) * 100 / COUNT(DISTINCT atom.atom¡d) |
| | Financial | Difference of highest average salary and lowest average salary indicates the gap between them | 'Gap between the highest average salary and the lowest average salary' refers to MAX(account.A11) - MIN(account.A11) |

The dataset provides query specific domain knowledge (evidence), in the form of NL domain statements. Existing approaches on BirdSQL, use these oracle query specific domain statements for SQL generation. Such statements are not available for real world DBs. To simulate real-world enterprise settings, forming 50-50% splits of the queries in each DB of the Dev set, maximizing the Tree Edit Distance between the SQLs of the splits, with the max-cut algorithm, leading to maximum divergence in their compositional distribution. Henceforth referring to these splits as the IN and OUT splits. The domain statements for all queries in the IN split are combined to form the domain repository for retrieval, while the domain statements for the OUT split are not included. It is found that most (~ 77%) queries in the OUT splits of all the DBs have no oracle domain statement overlap with the IN split queries. Whereas, remaining queries have only partial overlap. This allows to simulate the realistic scenario of domain repository construction without knowledge of the queries that may get posed on the DB. More importantly, the availability of the mapping between domain statements and queries. Table 6 provides the names of all the DBs in the Dev Splits of BirdSQL dataset, the number of tables, columns, total queries per DB and the number of domain statements in the repository of each DB, synthesized using the domain statements of the IN split queries. Releasing the extended DB.

Models and hyper-parameter Setting: For experimental purpose GPT-3.5 Turbo is used for generation of templatized domain statements from NL statements. For SQL generation task using the following LLMs: 1. GPT-3.5-turbo 175B with 16K context Mixtral 8X7B with 32K context, 2. LLaMA 3 70B with 262K context, 3. sqlcoder 8B with 16K context, and 4. Gemini 1.5 Flash with 128K context. For reproducibility, obtaining deterministic outcomes of the LLMs by setting the temperature to 0. Intuitively, requires better precision for IN split queries with guaranteed availability of the required domain knowledge and better recall for OUT split queries which may have only partial domain knowledge available in the repository. Hence, for the retriever, setting lower value of K = 4 for the IN split and higher value of K = 10 for the OUT split. Computing embeddings with best performing all-mpnet-base-v2 BERT based model from Sentence Transformers library.

Evaluation Metric: Following the Bird-SQL leader board, 'Execution Accuracy' used as the generated SQL queries evaluation metric. This metric is invariant to the syntactic variations in the generated and ground truth SQLs. Executing the ground truth SQL q against the database DB and treating the resulting answer as the ground truth answer. If the answer produced by predicted SQL matches the ground truth answer, the execution accuracy for that sample is 1. After thoroughly analyzing the dataset, it is observed that there are 20.17% queries with missing (examples 1 to 4 in Table 8) and 6.72% queries with erroneous (examples 5 to 8 in Table 8) oracle domain statements. Hence, evidence F1 is considered as a secondary metric.

Baselines: Comparing the following methods: 1. No Retrieval: (a) QS: Query Specific domain statements provided in the dataset, serve as an upper-bound for the OUT set, (b) No-DS: zero-shot with no domain statements, (c) All-DS-NT: All Non-Templatized NL Domain Statements ({ dNL}) provided by domain experts for IN Set, (d) All-DS-T: Same as All DS NT but with DBA scanned Templatized Statements ({d}). 2. Retrieval: Retrieval of top-K Non-Templatized (NT) domain statements ({dN^Lt} ⊆ {dNL}), where similarity is computed with the complete statement dNL and LLM generated Templatized (L-T) and DBA screened Templatized (T) domain statements ({ ^ dt} ⊆ {d}), where the similarity is computed with the 'text' (d.x) part of d. (a) Similarity with Whole NL query t: (i) BM25: Okapi variant of BM25 from the rank_bm25 library, (ii) BE: cosine similarity using BERT embedding, (iii) MS-M: the best performing dense retriever trained with MS MARCO dataset, (iv) STSb: the best performing14 dense retriever trained with STS dataset, (b) Similarity with Decomposed NL query: (sBSR): the method of set selection with BERT Score Recall. Treating the contextual representation of each word in the query as a salient aspect (decomposition) and perform retrieval of domain statements to cover all aspects.

Experiments on Query Decomposition: The semantics of the complete user query and the relevant domain statements can be different. It is observed that each of the distinct domain statements relevant to a user query, has a semantic match with only a partial query. Performing preliminary experiments, where manually decomposing a user query into semantic units. Then retrieving domain statements using BERT based semantic similarity for each of the decomposed units. It is observed that the combined top-K domain statements retrieved using individual decomposed query units are more relevant to the user query, than the top-K domain statements retrieved using the original user query. However, also observed that automatic semantic decomposition of a user query is a non-trivial task and the LLM based NL query decompositions are not good enough. Hence, query sub-sequence based semantic matching approach has been implemented.

Variations in IN-OUT Splits: It is assumed that 50-50 IN-OUT % splits. However, to check the performance of distinct IN-OUT % splits, removed IN split queries and adding them to OUT split, maintaining variations in the compositional distribution. Considering the availability of domain statements belonging to newly generated IN split queries only. Table 7 demonstrates the performance of SR-T approach with distinct IN-OUT splits with the best performing GPT-3.5-Turbo LLM. The number of domain statements in the repository of a DB decreases with the decreases in the % IN split. As expected this negatively affects the overall performance, especially due to decrease in the performance of OUT split, with less number of available domain statements in the repository. However, IN split performance almost remains consistent, due to availability of domain statements for all the queries in that split. The drop in the performance is more when the IN split is reduced to 40% from 50%, however later performance almost remains consistent.

Table 2

| LLM | Q S | No Retrieval | | | Retrieval: Whole NLQ | | | | | | | | | | Retrieval: Decomposed NLQ | | | |
|---|---|---|---|---|---|---|---|---|---|---|---|---|---|---|---|---|---|---|
| | | No D S | All DS | | BM25 | | BE | | MS-M | | STSb | | sBSR | | | SR | | |
| | | | N T | T | N T | T | N T | T | N T | T | N T | T | N T | T | N T | T | | |
| Mixt ral (8X7 B) | 20 .2 | 10 .3 | 11. 4 | 13 .1 | 12 .5 | 13 .0 | 13 .0 | 15 .6 | 11. 9 | 13 .5 | 13 .9 | 16 .4 | 13 .9 | 14 .3 | 14 .6 | 17 .2 |
| Llam a 3 (70B ) | 23 .5 | 12 .2 | 14 .4 | 17 .0 | 16 .0 | 16 .9 | 16 .0 | 21 .6 | 15 .1 | 18 .0 | 19 .2 | 22 .3 | 17 .2 | 19 .3 | 21 .1 | 25 .2 |
| SQL Code r (8B) | 25 .3 | 15 .3 | 15 .8 | 18 .8 | 18 .3 | 19 .1 | 18 .2 | 23 .0 | 17 .4 | 19 .4 | 20 .9 | 24 .4 | 19 .4 | 20 .6 | 24 .2 | 30 .1 |
| Gem ini 1.5 Flash | 40 .8 | 30 .4 | 34 .1 | 35 .2 | 31 .6 | 32 .1 | 31 .0 | 33 .9 | 31 .5 | 32 .5 | 35 .5 | 36 .8 | 32 .0 | 33 .0 | 35 .9 | 39 .6 |
| GPT 3.5 Turb o (175 B) | 42 .1 | 32 .2 | 35 .1 | 39 .0 | 35 .3 | 41 .2 | 33 .0 | 42 .3 | 31 .6 | 40 .8 | 37 .5 | 45 .8 | 35 .3 | 41 .4 | 38 .3 | 47 .5 |

2. Results

Listed below are research questions (RQs) and clarifications that are raised in this research domain. Each question is explained in context of how the invention disclosed addresses the technical challenges. The sub-query based retrieval disclosed herein in referred to as (SR) in the response to RQ.

(RQ): Worst performance of No DS as compared to QS, across LLMs and Splits demonstrate the need for having domain statements relevant to the query, in the LLM context (Tables 2 -execution accuracy averaged over ALL IN splits of Dev Set DBs of BirdSQL, NLQ: NL Query, NT: Non-Templatized, T: DBA Scanned Templatized Domain Statements, QS, No DS, All-DS, BM25, BE, MS-M, STSb, sBSR : Baselines. SR: sub-query based retrieval approach, Retrievals with K = 4. Bold: Best performance) and Table 4 - Execution accuracy averaged over ALL OUT Splits of Dev Set DBs of BirdSQL, Refer Table 2 for abbreviations, QS: Upperbound, Retrievals with K = 10). For the IN Split, observed larger increments in the average accuracy from No DS to SR-T (Question substring based retriever approach SR with templatized domain statements T) across all LLMs and DBs 3). This is expected, because the domain statement repository is derived from queries in the IN split.

RQ2: Does the retrieval based approach yield comparable performance to when oracle domain statements are used for a query? For the IN Split queries having availability of the required domain statements, SR-T approach performs better than QS, for 9 out of 11 DBs (Table 3 - execution accuracy of IN Split Queries of Dev Set DBs of BirdSQL by GPT-3.5-Turbo, NT: Non-Templatized, L-T: LLM generated Templatized, T: DBA Screened Templatized Domain statements, QS, No DS, All-DS: Baselines. SR: sub-query based retrieval approach. Retrievals with K=4. Bold Underline: Best performance, Bold: Second Best.) and 3 out of 5 LLMs (Table 2). For the remaining DBs and LLMs the performance approach is comparable. During DBA scanning of LLM templatized domain statements, it is observed that erroneous oracle statements (examples in Table 8) are rectified. Also, for the IN split, retrieval ensures 4 domain statements in the context for the SQL generation. This allows for non oracle yet relevant domain statements, boosting performance for queries with missing and insufficient oracle domain statements. As expected, for the OUT split, with no explicit availability of required domain statements, SR-T performance is inferior to QS for 3 out of 5 LLMs (Table 4) and 8 out of 11 DBs (Table 5 - Execution accuracy of OUT Split of Dev Set DBs BirdSQL by GPT-3.5-Turbo, Refer Table 3 for abbreviations. QS: Upperbound. Retrievals with K=10.). Here, QS acts as the upper-bound.

Table 3

| Database | QS | No DS | All DS | | SR | | |
|---|---|---|---|---|---|---|---|
| | | | NT | T | NT | L-T | T |
| Thrombosis Pred. | 30.9 | 18.5 | 20.7 | 13.4 | 24.6 | **35.8** | **37.0** |
| California Schools | 25.0 | 11.4 | 11.1 | 20.0 | 15.9 | **20.5** | **29.6** |
| Card Games | 32.6 | 22.1 | 26.0 | **32.6** | 29.4 | **32.6** | **47.4** |
| Debit Card Spec. | 21.9 | 15.6 | 30.3 | **33.3** | 28.1 | 31.2 | **34.4** |
| Toxicology | 47.2 | 41.7 | 31.5 | **46.6** | 45.8 | **48.6** | 43.1 |
| Financial | 43.4 | 34.0 | 35.2 | 33.3 | 32.0 | **35.8** | **41.5** |
| Codebase Comm. | 57.0 | 47.3 | 47.3 | 54.3 | 55.9 | 50.5 | **59.1** |
| Euro. Football2 | 35.9 | 31.3 | 38.5 | 33.9 | 35.9 | **45.3** | **53.1** |
| Formula 1 | 31.0 | 28.7 | 27.6 | 33.0 | 27.5 | **33.3** | **36.8** |
| Student Club | 50.6 | 39.2 | 40.0 | 46.3 | 48.1 | **55.6** | 53.2 |
| Superhero | 75.0 | 50.0 | 72.3 | 75.4 | 65.6 | **79.6** | 76.6 |
| Average | 42.1 | 32.2 | 35.1 | 39.0 | 38.3 | **43.6** | **47.5** |

RQ3: Is retrieving relevant domain statements better than providing all domain statements? For both the splits, for all LLMs, QS and SR-T performance is consistently better than All-DS-NT and All-DS-T (Tables 2 and 4). Moreover, for the IN Split, SR-T performs better than All-DS-NT and ALL-DS-T across almost all DBs (Table 3). This shows that even if the size of the prompt is not a concern, having relevant domain statements in the context is important. For the OUT splits, observed that All-DS-T and All-DS-NT performs better than SR-T for only 3 (California School, Tox-icology, Formula 1) and 2 (Codebase Community 524 and Formula 1) out of 11 DBs, respectively. Performing an extensive manual inspection for the samples for which incorrect answers got from the SQLs generated using SR-T, but correct answers with All-DS-T (Tables 16 and 17). Found that most of the failure cases fall in one of the following three categories: (i) the generated SQLs with All-DS-T are semantically wrong, but coincidentally lead to the correct answer (Example 6 in Table 8) or (ii) retrieved domain statements with SR-T are relevant to the NL query, however the LLM generates incorrect SQLs with these correct domain statements in the context (Example 2 in Table 8) or (iii) The generated SQLs by SR-T are incorrect due to wrong retrievals (Examples 4 and 5 in Table 8).

RQ4: What is the benefit of templatizing domain statements? For the IN split, with all LLMs, all the methods performs better with DBA scanned templatized domain statements (T) as opposed to when non-templatized NL domain statements (NT) are used in context (Table 2). It is observed the same for the OUT split, except for GPT-3.5-turbo LLM, for 3 methods (Table 4). For the IN split, for 10 out of 11 DBs, SR-L-T, with LLM generated templatized domain statements performs better than SR-NT, with NL domain statements, demonstrating the effectiveness of LLM based automated templatization (Table 3). On the other hand, for the OUT split, observed inferior performance of SR-L-T (Question substring based retrieval approach SR with Large Language Model generated Templatized domain statements L-T) over SR-NT (Question substring based retrieval approach SR with Non-templatized natural language domain statements) for 5 out of 11 DBs. However, after DBA screening, SR-T demonstrates better performance than SR-NT for 10 out of 11 DBs (Table 5). This demonstrates that the queries with shifted distribution (OUT split) require non-erroneous, DBA scanned templatized domain statements in context, to achieve performance comparable to the queries with availability of domain statements (IN Split).

RQ5: How important is it to decompose a user query into sub-sequences when matching with domain statements? SR-T approach, which retrieves using semantic match with NL query sub-strings performs better than all the four baseline methods which use the whole query for matching, across LLMs and splits (Table 2 and 4). This shows the importance of query decomposition. Superior performance of SR-T approach to sBSR, treating each word of the query as its decomposition, demonstrates efficacy of sub-sequences based query decomposition strategy.

RQ6: How does the performance change with consistent K value across IN and OUT splits? At inference time, it cannot be differentiated between IN and OUT queries. Hence, with best performing LLM (GPT-3.5 turbo) computing execution accuracy with domain statements retrieved with consistent K = 10 for both IN and OUT splits. Observed that SR-T performance averaged over both the splits (42.6), is the best surpassing the baselines QS(41.7), NO-DS(30.9), All-DS-NT(35.8), All DS-T(36.6), BM25-T(37.3), MSM-T(38.4), sBSR-T(38.0), BE-T(31.4), STSb-T(38.4), SR-NT(36.6) and SR-L-T(36.5). QS: Query Specific domain statements provided in the dataset, serve as an upper-bound.

Retrieved top-K Non-Templatized (NT) domain statements, where similarity is computed with the complete statement or retrieved top-K LLM generated Templatized (L-T), where the similarity is computed with the 'text' part of templatized domain statements (T). Similarity with whole natural language query: (i) BM25-T: Okapi variant of BM25 from the rank_bm25 library with templatized domain statements, (ii) BE-T: cosine similarity using BERT embedding of templatized domain statements. (iii) MSM-T: the best performing dense retriever trained with MS MARCO dataset with templatized domain statements. (iv) STSb-T: the best performing dense retriever is trained with STS dataset with templatized domain statements.

Similarity with decomposed NL query: sBSR-T: the method of set selection with BERT score recall with templatized domain statements. Treating the contextual representation of each word in the query as a salient aspect (decomposition) and perform retrieval of domain statements to cover all aspects.

Table 4

| LL M | Q S | No Retrieval | | | Retrieval: *Whole* NLQ | | | | | | | | | Retrieval: *Decomposed* NLQ | | | |
|---|---|---|---|---|---|---|---|---|---|---|---|---|---|---|---|---|---|
| | | No DS | AllDS | | BM25 | | BE | | MS-M | | STSb | | sBSR | | SR | |
| | | | NT | T | N T | T | N T | T | N T | T | NT | T | N T | T | N T | T |
| Mixt ral (8X 7B) | 15. 9 | 8.0 | 9.1 | 11. 2 | 10. 0 | 10. 5 | 9. 9 | 1 3. 0 | 0 9. 5 | 11. 0 | 11. 1 | 13. 0 | 1 0. 5 | 11 .4 | 1 2. 1 | **14. 7** |
| Lla ma 3 (70B ) | 23. 3 | 10. 9 | 13. 5 | 15. 4 | 14. 6 | 15. 3 | 1 7. 5 | 1 9. 6 | 1 3. 8 | 16. 6 | 19. 3 | 21. 1 | 1 5. 4 | 1 7. 0 | 2 0. 5 | **25. 6** |
| SQL Cod | 24. 0 | 13. 0 | 14. 6 | 16. 7 | 16. 2 | 17. 0 | 1 8. 3 | 2 1. 0 | 1 5. 4 | 17. 8 | 19. 3 | 23. 2 | 1 7. 9 | 1 8. 8 | 2 2. 2 | **26. 0** |
| er (8B) | | | | | | | | | | | | | | | | |
| Gem ini 1.5 Flas h | 40. 3 | 28. 2 | 34. 3 | 32. 1 | 29. 9 | 30. 6 | 2 9. 2 | 3 3. 0 | 3 0. 4 | 31. 1 | 33. 8 | 35. 4 | 3 0. 7 | 3 2. 1 | 3 4. 6 | **38. 7** |
| GPT 3.5 Turb o (175 B) | 41. 2 | 29. 7 | 36. 6 | 34. 2 | 28. 9 | 29. 2 | 3 0. 1 | 3 6. 1 | 3 4. 2 | 32. 3 | 33. 3 | 32. 9 | 3 5. 1 | 3 4. 7 | 3 4. 8 | **39. 5** |

Table 5

| Database | QS | No DS | All DS | | SR | | |
|---|---|---|---|---|---|---|---|
| | | | NT | T | NT | L-T | T |
| Thrombosis Pred. | 32.9 | 20.7 | 19.3 | 10.8 | **24.3** | **25.6** | **25.6** |
| California Schools | 24.4 | 11.1 | 13.0 | **21.7** | **20.0** | 13.3 | **20.0** |
| Card Games | 27.5 | 14.6 | 19.6 | **20.6** | 17.7 | 19.7 | **26.0** |
| Debit Card Spec. | 37.5 | 15.6 | 27.3 | **33.3** | 28.1 | 15.6 | **34.4** |
| Toxicology | 32.9 | 27.0 | 36.5 | **40.5** | 36.9 | 35.6 | **39.7** |
| Financial | 37.7 | **26.4** | 25.9 | 22.2 | 22.6 | 23.5 | **30.2** |
| Codebase Comm. | 55.9 | 45.2 | **48.4** | 45.7 | 46.2 | 45.1 | **47.3** |
| Euro. Football2 | 43.0 | 35.4 | **43.9** | 28.8 | 35.3 | 35.3 | **46.2** |
| Formula 1 | 36.8 | 35.6 | **36.8** | **37.5** | 28.7 | 31.0 | 35.6 |
| Student Club | 49.4 | 43.0 | **55.0** | 48.8 | 48.1 | 43.0 | **55.7** |
| Superhero | 70.8 | 38.5 | 66.7 | 62.1 | **69.2** | 52.3 | **67.7** |
| Average | 41.2 | 29.7 | **36.6** | 34.2 | 34.8 | 32.4 | **39.5** |

Table 6

| Database | Tables | Columns | Questions | DS |
|---|---|---|---|---|
| Thrombosis Pred. | 3 | 72 | 163 | 188 |
| California Schools | 3 | 89 | 89 | 52 |
| Card Games | 6 | 168 | 191 | 185 |
| Debit Card Spec. | 5 | 21 | 64 | 33 |
| Toxicology | 4 | 11 | 145 | 300 |
| Financial | 8 | 49 | 106 | 66 |
| Codebase Commu. | 8 | 71 | 186 | 136 |
| Euro. Football 2 | 7 | 199 | 129 | 124 |
| Formula 1 | 13 | 94 | 175 | 102 |
| Student Club | 8 | 48 | 158 | 127 |
| Superhero | 10 | 31 | 129 | 130 |

Table 7

| % Split | 50-50 | 40-60 | 30-70 | 20-80 | 10-90 |
|---|---|---|---|---|---|
| DS | 128.53 | 108.63 | 77.00 | 53.54 | 24.91 |
| IN | 47.51 | 44.65 | 46.72 | 46.81 | 48.41 |
| OUT | 39.48 | 33.18 | 32.57 | 34.43 | 34.80 |
| All | 43.48 | 37.73 | 36.76 | 36.86 | 35.83 |

Table 8

| # | Database | Question | Natural Language Domain Statements |
|---|---|---|---|
| | | Missing Domain Statements | |
| 1. | Euro. Football2 | What's the heading accuracy of Ariel Borysiuk? | **Ariel Borysiuk is player name** |

(continued)

| # | Database | Question | Natural Language Domain Statements |
|---|----------|----------|-----------------------------------|
| | | Missing Domain Statements | |
| 2. | Formula 1 | Name the top 3 drivers and the points they scored in the 2017 Chinese Grand Prix. | **Name of the drivers consists of their forename and surname.** |
| 3. | Debit Card Spec. | Which year recorded the most gas use paid in EUR? | **Extract Year from Date by considering last 4 digits** |
| 4. | Student Club | How many of the members' hometowns are from Maryland? | **Maryland refers to name of the state** |
| | | Erroneous Domain Statements | |
| 5. | Thrombosis Prediction | What was the age of the youngest patient when they initially arrived at the hospital? | the youngest patient is the one which has **MIN**(YEAR(Birthday) ) |
| 6. | Card Games | What percentage of cards without power are in French? | cards without power indicates value of **power** = '*' |
| 7. | Toxicology | How many double bonds does TR006 have and is it carcinogenic? | 'non-carcinogenic molecule' is represented by label = '-' |
| 8. | California Schools | What is the phone number of the school that has the highest number of test takers with an SAT score of over 1500? | **'False'** |

Evidence F1 Results: As illustrated in Table 8, after thoroughly analyzing the dataset, it was observed that there are 20.17% queries with missing (examples 1 to 4) and 6.72% queries with erroneous (examples 5 to 8) oracle domain statements. Hence, evidence F1 treated as secondary evaluation metric. With the assumption of availability of only IN split domain statements, evidence F1 computed only for the IN split, by considering top-K retrieved domain statements per query, where K is the number of ground-truth domain statements for that query. The Evidence F1 scores for all the Whole as well as decomposed query based retrieval mechanisms with Templatized domain statements (T) are as follows: (i) BM25: 0.35 (ii) BE: 0.33 (iii) MS-M: 0.34 (iv) STSb: 0.37 (v) sBSR: 0.35 (vi) SR: 0.39. Thus, evidence F1 for SR is the best. Note that though overall evidence F1 scores are low, for all LLMs the execution accuracy for SR-T for IN split is greater than or comparable with QS (Table 2). This is because, though for computation of F1 considering top-K retrieved domain statements, where K is the number of oracle domain statements for each query; for SQL generation, considering top-4 retrieved domain statements, which can be higher than the number of ground truth domain statements.

Table 9

| Database | Retrieval: Whole NLQ | | | | Retrieval: Decomposed NLQ | |
|----------|------|------|------|------|------|------|
| | BM25 | BE | MS M | STSb | sBSR | SR |
| Thrombosis Prediction | 27.2 | 27.2 | 34.6 | 34.6 | 27.2 | 37.0 |
| California schools | 25.0 | 18.2 | 18.9 | 25.0 | 25.0 | 29.6 |
| Card Games | 37.9 | 31.6 | 37.9 | 42.1 | 36.8 | **47.4** |
| Debit Card Spec. | 31.3 | **46.9** | 25.0 | 53.1 | 18.1 | 34.4 |
| Toxicology | 44.4 | **48.6** | 47.2 | 45.8 | 45.8 | 43.1 |
| Financial DB | 34.0 | 35.8 | 37.7 | 39.6 | 39.6 | **41.5** |
| Codebase | 57.0 | 58.1 | 51.6 | **59.1** | 51.6 | **59.1** |
| Community | | | | | | |
| European Football 2 | 34.4 | 39.0 | 34.4 | 42.2 | 37.5 | **53.1** |
| Formula 1 | 37.9 | **43.7** | 33.3 | 37.9 | 34.5 | 36.8 |
| Student Club | 41.8 | 40.5 | 45.6 | 49.4 | **57.0** | 53.2 |

(continued)

| Database | Retrieval: Whole NLQ | | | | Retrieval: Decomposed NLQ | |
|---|---|---|---|---|---|---|
| | BM25 | BE | MS M | STSb | sBSR | SR |
| Super hero | 70.3 | 70.3 | 67.2 | 71.9 | 59.4 | **76.6** |
| Average Accuracy | 41.2 | 43.5 | 40.8 | 38.3 | 41.4 | **47.5** |

Table 10

| Database | Retrieval: Whole NLQ | | | | Retrieval: Decomposed NLQ | |
|---|---|---|---|---|---|---|
| | BM25 | BE | MS M | STSb | sBSR | SR |
| Thrombosis Prediction | 12.2 | 20.7 | 15.9 | 18.3 | 23.2 | **25.6** |
| California schools | 08.9 | 13.3 | 13.3 | 15.6 | 17.8 | 20.0 |
| Card Games | 15.6 | **26.0** | 21.9 | 22.9 | 21.9 | **26.0** |
| Debit Card Spec. | 15.6 | 31.3 | 15.6 | 18.8 | 25.0 | **34.4** |
| Toxicology | 34.2 | 38.4 | 35.6 | 38.4 | 37.0 | **39.7** |
| Financial | 20.8 | 28.3 | 24.5 | 24.5 | 26.4 | **30.2** |
| DB | | | | | | |
| Codebase Community | 51.6 | **48.4** | 45.2 | 45.2 | 46.2 | 47.3 |
| European Football 2 | 27.7 | 36.9 | 38.5 | 40.0 | 32.3 | **46.2** |
| Formula 1 | 29.9 | 35.6 | 35.6 | **37.9** | 34.5 | 35.6 |
| Student Club | 40.5 | 46.8 | 41.8 | 44.3 | 49.2 | **55.7** |
| Super hero | 47.7 | 63.1 | 52.3 | 49.2 | 57.0 | **67.7** |
| Average Accuracy | 29.2 | 34.8 | 32.3 | 34.8 | 34.7 | **39.5** |

Error Analysis: As discussed in Research Question RQ3 for OUT splits of some DBs observed that All-DS-NT and T performs better than SR-T. Moreover, for IN splits of 5 DBs (Debit Card Specializing, Toxicology, Codebase Community Formula 1 and Student Club) (Table 9 - Execution accuracy on the IN Split Dev Set DBs of BirdSQL by GPT-3.5-Turbo. All results are with DBA scanned Templatized Domain statements (T), BM25, BE, MS-M, STSb, sBSR : Baselines. SR: sub-query based retrieval approach NLQ: NL Query, Retrievals with K = 4. Bold: Best performance) and OUT splits of 3 DB (Card Games, Codebase Community and Formula 1) (Table 10 - Execution accuracy on the OUT Split Dev Set DBs of BirdSQL by GPT-3.5Turbo. All results are with DBA scanned Templatized Domain statements (T), BM25, BE, MS-M, STSb, sBSR : Baselines. SR: sub-query based retrieval approach, NLQ: NL Query, Retrievals with K=10. Bold: Best performance) one of the other retrieval baselines performs better than SR-T. An extensive analysis performed (Table 11 - Error analysis part 1: Categories of errors where SR-T approach generates SQLs which give incorrect answers and All-DS-T or NT or other retrieval technique such as BE-T generates SQL which gives correct answer. GT: Ground Truth or oracle domain statements. The retrieved domain statements, matching with the oracle domain statements are coded with same color. Incorrect parts of generated SQLs are Bold. Parts of SQLs inside [ ] indicate necessary missing part and Table 12 - Error analysis part 2: Categories of errors where SR-T approach generates SQLs which give incorrect answers and All-DS-T or NT or other retrieval technique such as BE-T generates SQL which gives correct answer. GT: Ground Truth or oracle domain statements. The retrieved domain statements, matching with the oracle domain statements are coded with same color. Incorrect parts of generated SQLs are Bold) for the samples for which do not get correct answers from the SQLs generated using the approach (SR-T). Found that the errors get categorized into three broad categories: (i) Correct retrieval of domain statements but incorrect SQL generation (Examples 1, 2, and 3 from Table 11), (ii) Incorrect retrieval of domain statements affecting the generation of SQLs (Examples 4, 5 from Table 12), and (iii) Generated SQLs of baselines yield the answer which matches with the ground truth answer but the SQLs are semantically incorrect (Example 6 from Table 12).

Table 11

| Sr. No. | DB | Question | Appr--oach | Templatized Domain Statements | SQL |
|---|---|---|---|---|---|
| Error Category: Correct retrieval but incorrect SQLs generated | | | | | |
| 1 | Formula1 | Calculate the average number of oxygen | GT | 1. 'single-bonded molecules' refers to bond_type = '-' 2. average number of | SELECT CAST(COUNT(DISTINCT |

| | | | | | |
|---|---|---|---|---|---|
| | | atoms in single-bonded molecules. (Toxic IID Br vs SR) | | oxygen atom = AVG(element = 'o'); | CASE WHEN T1.element = 'o' THEN T1.molecule_id ELSE NULL END) AS REAL) / COUNT(DISTINCT T1.molecule_id) FROM atom AS T1 INNER JOIN bond AS T2 ON T1.molecule_id = T2.molecule_id WHERE T2.bond_type = '-' |
| | | | BE-T | 1. 'average number of oxygen atoms in single-bonded molecules' refers to CAST(COUNT(DISTINCT CASE WHEN atom.element = 'o' THEN atom.molecule_id ELSE NULL END) AS REAL) / COUNT(DISTINCT atom.molecule_id) <br><br> 2. **'average number of bonds the atoms have'** refers to | SELECT CAST(COUNT(DISTINCT CASE WHEN atom.element = 'o' AND bond.bond_type = '-' THEN atom.molecule_id ELSE NULL END) AS REAL) / COUNT (DISTINCT atom.molecule_id) AS average_oxygen_atoms FROM atom JOIN bond ON atom.molecule_id = bond.molecule_id |

| | | | | CAST(COUNT (connected.bond_id) AS REAL) / COUNT (atom.atom_id) | WHERE bond.bond_type = '-'; |
|---|---|---|---|---|---|
| | | | | 3. 'percentage of carbon in double-bond molecules' refers to CAST (COUNT(DISTINCT CASE WHEN atom.element = 'c' THEN atom.atom_id ELSE NULL END) AS REAL) * 100 / COUNT (DISTINCT atom.atom_id) | |
| | | | SR-T | 1. 'average number of oxygen atoms in single-bonded molecules' refers to CAST(COUNT(DISTINCT CASE WHEN atom.element = 'o' THEN atom.molecule_id ELSE NULL END) AS REAL) | SELECT CAST(COUNT(DISTINCT CASE WHEN atom.element = 'o' THEN atom.molecule_id ELSE NULL END) AS REAL) / COUNT (DISTINCT atom.molecule_id) |

| | | | | | FROM **atom JOIN molecule ON atom.molecule_id = molecule.molecule_id JOIN bond** ON atom.molecule_id = bond.molecule_id WHERE bond.bond_type = '-' AND atom.element = 'o'; |
|---|---|---|---|---|---|
| | | | | / COUNT(DISTINCT atom.molecule_id) 2. 'single-bonded molecules' refers to bond.bond_type = '-' 3. 'oxygen' refers to atom.element = 'o' | |
| 2 | Toxicology | Give me the molecule ID of the double bond type. | GT | 1. 'double bond' refers to bond_type = '=' | SELECT DISTINCT T.molecule_id FROM bond AS T WHERE T.bond_type = '=' |
| | | | All-DS-T | Not Applicable | SELECT DISTINCT molecule_id FROM bond WHERE bond_type = '='; |
| | | | SR-T | 1. 'double bond' refers to bond.bond_type = '=' 2. 'not having double bond' refers to bond_type <> '=' 3. 'type of bond' refers to bond.bond_type | **SELECT molecule_id** FROM bond WHERE bond_type = '='; |

| 3 | CodebaseCommunity | Which user has a higher reputation, Harlan or Jarrod Dixon? | GT | 1. 'Harlan' and 'Jarrod Dixon' are both DisplayName' 2. 'highest reputation refers to Max(Reputation)' | SELECT DisplayName FROM users WHERE DisplayName IN ('Harlan', 'Jarrod Dixon') AND Reputation = ( SELECT MAX(Reputation) FROM users WHERE DisplayName IN ('Harlan', 'Jarrod Dixon')) |
| | | | All-DS-NT | Not Applicable | SELECT DisplayName FROM users WHERE DisplayName = 'Harlan' OR DisplayName = 'Jarrod Dixon' ORDER BY Reputation DESC LIMIT 1; |

| | | | | SR-T | 1. 'Who has the highest reputation' refers to ORDER BY users.Reputation DESC LIMIT 1<br><br>3. 'the user csgillespie owns' refers to users.DisplayName = 'csgillespie'<br><br>4. 'votes made by Harlan' refers to votes.DisplayName = 'Harlan'<br><br>5. 'name of users' refers to users.DisplayName<br><br>6. 'the user Samuel' refers to users.UserDisplayName = 'Samuel'<br><br>... | SELECT DisplayName FROM users WHERE **[DisplayName IN ('Harlan', 'Jarrod Dixon') AND]** Reputation = (SELECT MAX(Reputation) FROM users WHERE DisplayName = 'Harlan' OR DisplayName = 'Jarrod Dixon') |

Table 12

| Sr. No. | DB | Query | Appr--oach | Templatized Domain Statements | SQL |
|---|---|---|---|---|---|
| Error Category: Incorrect retrieval affecting the generated SQLs | | | | | |

| 4 | Formula1 | List circuits which host 4 f1 races from year 1990 to 2000. | GT | 1. 'from year 1990 to 2000 refers to year(date) between 1990 and 2000' 2. 'did not host any f1 races refers to COUNT (raceId) = 0' | SELECT DISTINCT T1.name FROM circuits AS T1 INNER JOIN races AS T2 ON T2.circuitID = T1.circuitId WHERE STRFTIME('%Y', T2.date) BETWEEN '1990' AND '2000' GROUP BY T1.name HAVING COUNT(T2.raceId) = 4 |
| | | | All-DS-T | Not Applicable | SELECT circuits.name FROM circuits JOIN races ON circuits.circuitId = races.circuitId JOIN seasons ON races.year = seasons.year WHERE seasons.year BETWEEN 1990 AND 2000 GROUP BY circuits.name HAVING COUNT(DISTINCT races.raceId)= 4; |
| | | | SR-T | 1. **'In which Formula_1 race' refers to DISTINCT races.name** 2. 'From (100) to (100)' refers to race.year BETWEEN 100 AND 100 3. 'from (100) to (100)' refers to races.year BETWEEN 100 AND 100 | SELECT circuits.name FROM circuits JOIN races ON circuits.circuitId = races.circuitId JOIN seasons ON races.year = seasons.year WHERE seasons.year BETWEEN 1990 AND 2000 GROUP BY circuits.name HAVING |

| | | | | | ... | COUNT(DISTINCT races.name) = 4; |
|---|---|---|---|---|---|---|
| 5 | Toxicology | | What is the carcinogenic label for bond TR001_2_4? | GT | 1. 'label = '+' mean molecules are carcinogenic' | SELECT DISTINCT T2.label FROM atom AS T1 INNER JOIN molecule AS T2 ON T1.molecule_id = T2.molecule_id INNER JOIN bond AS T3 ON T2.molecule_id = T3.molecule_id WHERE T3.bond_id = 'TR001_2_4' |
| | | | | BE-T | 1. 'carcinogenic' refers to molecule.label = '+' <br> 2. 'carcinogenic label' refers to molecule.label = '+' <br> 3. **'not carcinogenic' refers to molecule.label = '-'** <br> 4. 'carcinogenic compound' refers to molecules with molecule.label = '+' | SELECT DISTINCT t2.label FROM atom AS t1 JOIN molecule AS t2 ON t1.molecule_id = t2.molecule_id JOIN bond AS t3 ON t2.molecule_id = t3.molecule_id WHERE T3.bond_id = 'TR001_2_4' |
| | | | | SR-T | 1. 'carcinogenic' refers to molecule.label = '+' <br> 2. 'carcinogenic label' refers to molecule.label = '+' | SELECT DISTINCT molecule.label FROM **bond JOIN connected ON bond.bond_id =** connected.bond_id JOIN |

| | | | | 3. **'bond_id TR001_3_4' refers to connected.bond_i d = 'TR001_3_4'** 4. 'carcinogenic molecules' refer to label = '+' | **atom ON connected.atom_id = atom.atom_id JOIN molecule ON** atom.molecule_id = molecule.molecule_id WHERE bond.bond_id = 'TR001_2_4' ; |
|---|---|---|---|---|---|
| Error Category: ALL-DS-T and ALL-DS-NT generates SQLs which lead to correct output but are semantically incorrect | | | | | |
| 6 | Toxicology | Enumerate the bond ID of triple bond type molecules and tell me if they are carcinogenic or not. | GT | 1. triple bond refers to bond_type = '#' 2. label = '+' mean molecules are carcinogenic **3. label = '-' means molecules are non-carcinogenic** | SELECT DISTINCT T1.bond_id , T2.label FROM bond AS T1 INNER JOIN molecule AS T2 ON T1.molecule_id = T2.molecule_id WHERE T1.bond_type = '#' |
| | | | All-DS-T | Not Applicable | **SELECT bond.bond_id,** molecule.label FROM bond JOIN molecule ON bond.molecule_id = molecule.molecule_id WHERE bond.bond_type = '#'; |
| | | | SR-T | 1. 'triple bond' refers to bond.bond_type = '#' 2. 'carcinogenic' refers to molecule.label = '+' 3. 'molecules with a triple bond type' refers | **SELECT bond_id,** molecule.label FROM bond JOIN molecule ON bond.molecule_id = molecule.molecule _id WHERE bond.bond_type = '#' AND |

| | | | | to bond.bond_type = '#'  4.   'molecules with triple bonds' refers to bond.bond_type = '#'  5.   'carcinogen ic-type molecules' refers to molecules with molecule.label = '+' 6. 'molecules containing carcinogenic compounds' refers to molecules with molecule.label = '+' | molecule.label = '+'; |
|---|---|---|---|---|---|

In example 1, the templatized domain statements retrieved with SR-T based approach match with the oracle domain statements, yet the SQL generated has an unnecessary JOIN on 'molecule' table, which makes the SQL query incorrect. Note that the retrieval done using SR-T is better than that with the embedding base (BE-T) approach, where some of the retrieved domain statements do not match with oracle domain statements. Example 2 also has correct set-of templatized domain statements retrieved with question substring based retriever approach SR with templatized domain statements T (SR-T) approach, but the SQL query is incorrect as it does not use the DISTINCT keyword, which is present in the GT SQL. Example 3 is another such example where even though the retrieval is correct, the generated SQL is incorrect, with an important constraint, "Display- Name IN ('Harlan', 'Jarod Dixon')" is missing in the generated SQL query. In example 4, which is a query part of OUT set, with approach SR-T, an incorrect templatized domain statement gets retrieved. Upon close observation, it is found that the 'text' part of this domain statement 'In which formula_1 race' is distinctly similar to the query sub-string 'which host 4 f1 races'. Here the sub-string matching leads to erroneous retrieval.

The generated SQL query is affected by it as it uses 'races.name' from the retrieved domain statement, instead of 'races.raceId'. On the similar lines, for example 5 an incorrect templatized domain statement is retrieved by approach SR-T. It gets retrieved because the 'text' part 'bond_id TR001_3_4' of the statement matches with the 'bond TR001_2_4' sub-string of the NL query. Domain statement 3 has 'connected.bond_id' used in it, which is picked up by the LLM as an incorrect hint and results in an unnecessary join on the table 'connected' leading to generation of incorrect SQL query. The SQL generated for Example 6, with approach SR-T is incorrect though the retrievals are correct, as it uses an additional constraint of molecule.label = '+' instead of project the labels of the molecule as the part of SELECT clause as it is done in the ground truth SQL. However, more importantly the SQL generated by All-DS-T approach is also incorrect, as it does not use the keyword DISTINCT, but coincidentally gives the same output as ground truth SQL.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of understanding the context of natural language query to generate associated SQL logic and retrieving the closest domain statements to natural language query. The embodiment, thus, provides a mechanism for generating templatized domain statement, which guides the trained/fine-tuned model to understand the at least one query in natural language to generate the associated SQL query. Moreover, the embodiments further provide a mechanism of retrieving the closest templatized domain statement for at least one query in natural language.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method, comprising:

receiving (202), via one or more hardware processors, a) at least one query in natural language, b) a database schema, and c) a database meta data from domain specific data source;
pre-processing (204), via the one or more hardware processors, the at least one query to obtain a pre-processed at least one query;
segmenting (206), via the one or more hardware processors, the pre-processed at least one query into one or more sets, each comprising one or more sub-queries;
computing (208), via the one or more hardware processors, an embedding for each of the one or more sub-queries in the one or more sets;
computing (210), via the one or more hardware processors, a similarity metric between the embedding of the one or more sub-queries in the one or more sets, and an embedding of a natural language part of a plurality of templatized domain statements;
computing (212), via the one or more hardware processors, a weighted set score for each of the one or more sets using the one or more sub-queries in the one or more sets and the similarity metric, wherein the weighted set score represents extent of similarity of the at least one query with each of the plurality of templatized domain statements;
retrieving (214), via the one or more hardware processors, one or more of the plurality of templatized domain statements based on the weighted set score; and

generating (216), via the one or more hardware processors, a SQL query for the at least one query in natural language, using the database schema, the database meta data, and the retrieved one or more templatized domain statements.

2. The method as claimed in claim 1, wherein the pre-processing comprises replacing a numerical value and a date to a predefined fixed integer.

3. The method as claimed in claim 1, wherein segmenting the pre-processed at least one query into the one or more sets comprising the one or more sub-queries comprises:

creating, via the one or more hardware processors, a list of a plurality of individual words in the pre-processed at least one query;
generating, via the one or more hardware processors, the one or more sets comprising a plurality of combinations of the one or more sub-queries in the one or more sets by iterating through the list of a plurality of individual words, and joining two or more of the plurality of individual words;
iteratively generating, via the one or more hardware processors, the one or more sub-queries until all of the plurality of individual words are used in at least one of the one or more sets, wherein each of the one or more sets comprises one or more sub-queries of same or different length of plurality of individual words, and wherein each of the one or more sub-queries among the one or more sets and each of the one or more set among the one or more sets are unique; and
generating, via the one or more hardware processors, the one or more sub-queries in the one or more sets until the one or more sub-queries are matching with the at least one query in natural language.

4. The method as claimed in claim 1, wherein computing the weighted set score by using the length of sub-query representing number of words in the sub-query and the one or more similarity metric is represented as:

Set_Score = $\Sigma$ (length of sub-string (number of words)) * (Max. similarity score with a templatized domain statement), where, the length of sub-string is the number of words in the one or more sub-queries, and the Max. similarity score with a templatized domain statement is the similarity metric of the one or more sub-queries in the one or more sets.

5. The method as claimed in claim 1, wherein generating the plurality of templatized domain statements comprises:

receiving, via the one or more hardware processors, a) one or more domain statements for a given domain, in natural language, and b) a domain specific database schema comprising name of a plurality of tables, columns, data types, and representative strings corresponding to one or more entities stored in each column;
selecting, via the one or more hardware processors, one or more few shot exemplars from a training dataset comprising a natural language query and a plurality of associated SQL queries;
generating, via the one or more hardware processors, the natural language part of each of the plurality of templatized domain statement by applying a trained model on the one or more few shot exemplars, the one or more domain statements, and the domain specific database schema;
generating, via the one or more hardware processors, a SQL logic for the natural language part of each of the plurality of the templatized domain statements by applying the trained model on the one or more few shot exemplars, the one or more domain statements, the database schema, and the generated natural language part of each of the plurality of templatized domain statements;
validating, via the one or more hardware processors, the natural language part of each of the plurality of templatized domain statements and associated SQL logic for consistency using the trained model, wherein, if the validation is inconsistent, the SQL logic associated with the natural language part of each of the plurality of templatized domain statements is updated using the trained model, and wherein if validation is consistent, the templatized domain statement along with the SQL logic are generated by using the trained model for combining the natural language part of each of the plurality of templatized domain statements and the SQL logic, based on the one or more few shot exemplar; and
computing, via the one or more hardware processors, the embedding of the natural language part of the plurality of templatized domain statements, wherein the computed embedding is stored in a database.

6. A system (100), comprising:

one or more hardware processors (104);
a communication interface (106); and
a memory (102) storing a plurality of instructions, wherein the plurality of instructions cause the one or more hardware processors to:

receive a) at least one query in natural language, b) a database schema, and c) a database meta data from domain specific data source;
pre-process the at least one query to obtain a pre-processed at least one query;
segment the pre-processed at least one query into one or more sets, each comprising one or more sub-queries;
compute an embedding for each of the one or more sub-queries in the one or more sets;
compute a similarity metric between the embedding of the one or more sub-queries in the one or more sets, and an embedding of a natural language part of a plurality of templatized domain statements;
compute a weighted set score for each of the one or more sets using the one or more sub-queries in the one or more sets and
the similarity metric, wherein the weighted set score represents extent of similarity of the at least one query with each of the plurality of templatized domain statements;
retrieve one or more of the plurality of templatized domain statements based on the weighted set score; and
generate a SQL query for the at least one query in natural language, using the database schema, the database meta data,
and the retrieved one or more templatized domain statements.

7. The system as claimed in claim 6, wherein the pre-processing comprises replacing a numerical value and a date to a predefined fixed integer.

8. The system as claimed in claim 6, wherein the one or more hardware processors are configured for segmenting the pre-processed at least one query into the one or more sets comprising the one or more sub-queries comprises:

creating a list of a plurality of individual words in the pre-processed at least one query;
generating the one or more sets comprising a plurality of combinations of the one or more sub-queries in the one or more sets by iterating through the list of a plurality of individual words, and joining two or more of the plurality of individual words;
iteratively generating the one or more sub-queries until all of the plurality of individual words are used in at least one of the one or more sets, wherein each of the one or more sets comprises one or more sub-queries of same or different length of plurality of individual words, and
wherein each of the one or more sub-queries among the one or more sets, and each of the one or more set among the one or more sets are unique; and
generating the one or more sub-queries in the one or more sets until the one or more sub-queries are matching with the at least one query in natural language.

9. The system as claimed in claim 6, wherein the one or more hardware processors are configured for computing the weighted set score by using the length of sub-query representing number of words in the sub-query and the one or more similarity metric is represented as:

Set_Score = $\Sigma$ (length of sub-string (number of words)) * (Max. similarity score with a templatized domain statement), where, the length of sub-string is the number of words in the one or more sub-queries, and the Max. similarity score with a templatized domain statement is the similarity metric of the one or more sub-queries in the one or more sets.

10. The system as claimed in claim 6, wherein the one or more hardware processors are configured for generating the plurality of templatized domain statements comprises:

receiving, a) one or more domain statements for a given domain, in natural language, and b) a domain specific database schema comprising a name of a plurality of tables, columns, data types, and representative strings corresponding to one or more entities stored in each column;
selecting one or more few shot exemplars from a training dataset comprising a natural language query and a plurality of associated SQL queries;

generating the natural language part of each of the plurality of templatized domain statement by applying a trained model on the one or more few shot exemplars, the one or more domain statements, and the domain specific database schema;

generating a SQL logic for the natural language part of each of the plurality of the templatized domain statements by applying the trained model on the one or more few shot exemplars, the one or more domain statements, the database schema, and the generated natural language part of each of the plurality of templatized domain statements;

validating the natural language part of each of the plurality of templatized domain statements and associated SQL logic for consistency using the trained model, wherein,

if validation is inconsistent, the SQL logic associated with the natural language part of each of the plurality of templatized domain statements is updated using the trained model, wherein

if validation is consistent, the templatized domain statement along with the SQL logic are generated by using the trained model for combining the natural language part of each of the plurality of templatized domain statements and the SQL logic, based on the one or more few shot exemplar; and

computing the embedding of the natural language part of the plurality of templatized domain statements, wherein the computed embedding is stored in a database.

11. One or more non-transitory machine-readable information storage mediums comprising one or more instructions which when executed by one or more hardware processors cause:

receiving a) at least one query in natural language, b) a database schema, and c) a database meta data from domain specific data source;

pre-processing, the at least one query to obtain a pre-processed at least one query;

segmenting the pre-processed at least one query into one or more sets, each comprising one or more sub-queries;

computing an embedding for each of the one or more sub-queries in the one or more sets;

computing a similarity metric between the embedding of the one or more sub-queries in the one or more sets, and an embedding of a natural language part of a plurality of templatized domain statements;

computing a weighted set score for each of the one or more sets using the one or more sub-queries in the one or more sets and the similarity metric, wherein the weighted set score represents extent of similarity of the at least one query with each of the plurality of templatized domain statements;

retrieving one or more of the plurality of templatized domain statements based on the weighted set score; and

generating a SQL query for the at least one query in natural language, using the database schema, the database meta data, and the retrieved one or more templatized domain statements.

12. The one or more non-transitory machine readable information storage mediums as claimed in claim 11, wherein the pre-processing comprises replacing a numerical value and a date to a predefined fixed integer.

13. The one or more non-transitory machine readable information storage mediums as claimed in claim 11, wherein segmenting the pre-processed at least one query into the one or more sets comprising the one or more sub-queries comprises:

creating a list of a plurality of individual words in the pre-processed at least one query;

generating the one or more sets comprising a plurality of combinations of the one or more sub-queries in the one or more sets by iterating through the list of a plurality of individual words, and joining two or more of the plurality of individual words;

iteratively generating the one or more sub-queries until all of the plurality of individual words are used in at least one of the one or more sets, wherein each of the one or more sets comprises one or more sub-queries of same or different length of plurality of individual words, and

wherein each of the one or more sub-queries among the one or more sets and each of the one or more set among the one or more sets are unique; and

generating the one or more sub-queries in the one or more sets until the one or more sub-queries are matching with the at least one query in natural language.

14. The one or more non-transitory machine readable information storage mediums as claimed in claim 11, wherein computing the weighted set score by using the length of sub-query representing number of words in the sub-query and the one or more similarity metric is represented as:

Set_Score = $\Sigma$ (length of sub-string (number of words)) * (Max. similarity score with a templatized domain statement), where, the length of sub-string is the number of words in the one or more sub-queries, and the Max. similarity score with a templatized domain statement is the similarity metric of the one or more sub-queries in the one or more sets.

15. The one or more non-transitory machine readable information storage mediums as claimed in claim 11, wherein generating the plurality of templatized domain statements comprises:

receiving a) one or more domain statements for a given domain, in natural language, and b) a domain specific database schema comprising name of a plurality of tables, columns, data types, and representative strings corresponding to one or more entities stored in each column;
selecting one or more few shot exemplars from a training dataset comprising a natural language query and a plurality of associated SQL queries;
generating the natural language part of each of the plurality of templatized domain statement by applying a trained model on the one or more few shot exemplars, the one or more domain statements, and the domain specific database schema;
generating a SQL logic for the natural language part of each of the plurality of the templatized domain statements by applying the trained model on the one or more few shot exemplars, the one or more domain statements, the database schema, and the generated natural language part of each of the plurality of templatized domain statements;
validating the natural language part of each of the plurality of templatized domain statements and associated SQL logic for consistency using the trained model, wherein,
if the validation is inconsistent, the SQL logic associated with the natural language part of each of the plurality of templatized domain statements is updated using the trained model, and wherein
if validation is consistent, the templatized domain statement along with the SQL logic are generated by using the trained model for combining the natural language part of each of the plurality of templatized domain statements and the SQL logic, based on the one or more few shot exemplar; and
computing the embedding of the natural language part of the plurality of templatized domain statements, wherein the computed embedding is stored in a database.

SYSTEM
100

MEMORY
102

DATABASE
108

HARDWARE
PROCESSOR(S)
104

I/O INTERFACE(S)
106

FIG. 1A

100

| Creating a multiple sets comprising Multiple sub-queries in a set (3) | → | Embeddings for each sub-queries (4) | → | Similarity metrics between embeddings of sub-queries and natural language part of a templatized domain statements (5) |

↑

| Preprocessing the natural language query (2) |

↓

| Weighted set scores each set (6) |

↑

| a) Natural language query, b) database schema, and c) database metadata (1) |

↓

| Retrieving templatized domain statements based on weighted set score (7) |

↓

| SQL query for natural language query (8) |

FIG. 1B

200

receiving, via one or more hardware processors, a) at least one query in natural language, b) a database schema, and c) a database meta data from domain specific data source ⟶ 202

pre-processing, via the one or more hardware processors, the at least one query to obtain a pre-processed at least one query ⟶ 204

segmenting, via the one or more hardware processors, the pre-processed at least one query into one or more sets, each comprising one or more sub-queries ⟶ 206

computing, via the one or more hardware processors, an embedding for each of the one or more sub-queries in the one or more sets ⟶ 208

(A)

FIG. 2A

(A)

computing, via the one or more hardware processors, a similarity metric
using the embedding of the one or more sub-queries in the one or more sets,
and an embedding of a natural language part of a plurality of templatized
domain statements                                                    210

computing, via the one or more hardware processors, a weighted set score
for each of the one or more sets using the one or more sub-queries in the
one or more sets and the similarity metric, wherein the weighted set score
represents extent of similarity of the at least one query with each of the
plurality of templatized domain statements                           212

retrieving, via the one more hardware processors, one or more of the plurality
of templatized domain statements based on the weighted set score     214

generating, via the one more hardware processors, a SQL query for the at
least one query in natural language, using the database schema, the database
meta data, and the retrieved one or more templatized domain statements  216

FIG. 2B

Europäisches
Patentamt

European
Patent Office

Office européen
des brevets

# EUROPEAN SEARCH REPORT

**Application Number**

EP 25 20 3519

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/257679 A1 (SHEININ VADIM [US] ET AL) 13 August 2020 (2020-08-13) * the whole document * ----- | 1-15 | INV. G06F16/2452 G06F16/334 G06F40/30 |
| | | | **TECHNICAL FIELDS SEARCHED (IPC)** G06F G06N |

The present search report has been drawn up for all claims

| Place of search | Date of completion of the search | Examiner |
|---|---|---|
| The Hague | 15 January 2026 | Warry, Lawrence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 722 942 A1**

## ANNEX TO THE EUROPEAN SEARCH REPORT
## ON EUROPEAN PATENT APPLICATION NO.

EP 25 20 3519

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2026

| Patent document cited in search report | Publication date | Patent family member(s) | Publication date |
|---|---|---|---|
| US 2020257679 A1 | 13-08-2020 | CN 111563141 A | 21-08-2020 |
| | | US 2020257679 A1 | 13-08-2020 |

For more details about this annex : see Official Journal of the European Patent Office, No. 12/82

EPO FORM P0459

39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421074493